Europäisches Patentamt

European Patent Office

Office européen des brevets

(19)

(11) Veröffentlichungsnummer: **0 289 932**

**A1**

(12) **EUROPÄISCHE PATENTANMELDUNG**

(21) Anmeldenummer: 88106766.4

(22) Anmeldetag: 27.04.88

(51) Int. Cl.⁴: **F23C 11/02 , F23J 3/04 , F23L 9/02 , B01J 8/38**

(30) Priorität: 27.04.87 HU 184687

(43) Veröffentlichungstag der Anmeldung:
09.11.88 Patentblatt 88/45

(84) Benannte Vertragsstaaten:
AT BE CH DE ES FR GB GR IT LI LU NL SE

(71) Anmelder: ENERGIAGAZDALKODASI INTEZET
33-34, Bem-rakpart
H-1027 Budapest II(HU)

(72) Erfinder: Boross, László, Dipl.-Ing. Dr.
Lágymányosi u. 15
H-1111 Budapest(HU)
Erfinder: Gerlai, Tibor, Dipl.-Ing.
Petöfi u. 7
H-1195 Budapest(HU)
Erfinder: Horváth, Ferenc, Dipl.Ing.
Dohány u. 36
H-1074 Budapest(HU)

(74) Vertreter: Patentanwälte Viering & Jentschura
Steinsdorfstrasse 6
D-8000 München 22(DE)

(54) Verfahren und Anlage zum Verbrennen von festen fluidisierten Brennstoffen.

(57) Verfahren und Anlage zum Verbrennen von festen fluidisierten Brennstoffen. Es wird Luft von unten her eingeblasen, wodurch eine Fluidisationsschicht (4) erzeugt wird. Im Sinne der erfindungsgemäßen Weiterentwicklung wird die Luft mit einer Geschwindigkeit eingeblasen, die das Entfernen der feineren Fraktionen des Brennstoffes und wenigstens eines Teils der brennbaren Gase aus der Fluidisationsschicht (4) ermöglicht. Mit der Menge der eingeblasenen Luft wird die Brenntemperatur der Fluidisationsschicht eingestellt, wonach die zum Verbrennen des aus der Fluidisationsschicht herausgeblasenen Staubes bzw. Gases erforderliche Sauerstoffmenge zugeführt wird. Bei der erfindungsgemäßen Anlage ist zwischen dem Feuerraum (1) und den sonstigen Teilen der Feuerungsanlage ein Ausströmungsquerschnitt (17), dessen Querschnitt gegenüber dem Querschnitt des Feuerraums (1) verengt ist, ausgestaltet und zwar dadurch, daß an dem Ausgang des Feuerraums (1) wenigstens eine ein Ausströmen fester Brennprodukte verhindernde und den Ausströmungsquerschnitt (17) verengende Prallplatte (19) angeordnet ist.

Fig.2

Fig.1

EP 0 289 932 A1

RAD ORIGINAL

## Verfahren und Anlage zum Verbrennen von festen fluidisierten Brennstoffen

Die Erfindung betrifft ein Verfahren zum Verbrennen von festen fluidisierten Brennstoffen, bei welchem die Luft von unten eingeblasen wird und dadurch eine Fluidisationsschicht erzeugt wird, in der und über der die Wärme freigesetzt wird. Die Erfindung betrifft auch eine zur Realisierung des Verfahrens dienende Anlage, die eine mit dem Brennstoff gespeiste Fluidisationsschicht sowie von den sonstigen Teilen der Anlage separierte und die Fluidisierung der Schicht erzeugende luftverteilende und luftzuführende Organe aufweist. Die Anlage ist insbesondere zur Realisierung des erfindungsgemäßen Verfahrens bestens geeignet.

Im Hinblick auf die Forderungen des Umweltschutzes können aus Ölfeuerungen emittierte Schwefeldioxide sowie aus Gasfeuerungen emittierte Stickoxide und aus Kohlenfeuerungen emittierte Schwefel-und Stickoxide Probleme mit sich bringen.

Verschiedene Versionen der Fluidisationsfeuerungsverfahren für feste Brennstoffe sind wohl bekannt. Bei diesen Verfahren liegt der Temperaturbereich im allgemeinen zwischen 800 und 900 °C. Die Vorteile der erwähnten Verfahren zeigen sich darin, daß die Stickoxidbildung gering ist und die Bedingungen des Abbindens der Schwefeldioxide mit Zuschlagstoffen günstig sind, so z. B. durch Einführen von Kalkstein in den Feuerraum. Die Verfahren können vorteilhaft auch mit Brennstoffen schlechter Qualität durchgeführt werden, da sie gegenüber dem Aschenanteil unempfindlich sind.

Eine Gruppe von Verfahren werden in Fluidisationsfeuerungen mit gekühlter Schicht verwirklicht. Ein Nachteil ergibt sich aus den verhältnismäßig hohen Investitionskosten, die auch auf die Anwendung der Schichtkühlrohre, der komplizierten Zuführsysteme und der Regelvorrichtungen zurückgeführt werden können. Eine weitere Schwierigkeit besteht im Regeln der Betriebsweise mit Teillastbetrieb. Pro Flächeneinheit des Luftverteilers kann nur eine verhältnismäßig geringe Wärmeleistung freigesetzt werden. Der brennbare Inhalt des aus der Schicht ausgeblasenen Staubes kann auch zu Feuerungsverlusten führen. Diesen Nachteil pflegt man mit einem dem die fluidisierte Schicht aufnehmenden Raum nachgeschalteteten Staubabscheider und durch die Rezirkulation des Staubes zu eliminieren.

Als ein solches System soll die sogenannte Zirkulationsfluidisation erwähnt werden, bei der separate gemauerte Zyklone und Rückspeiseelemente erforderlich sind, die ihrerseits Zusatzkosten und ein Mehr an Eigenverbrauch hervorrufen. Bei diesen Lösungen ist die im Interesse der Entschwefelung zugeführte Kalksteinpulvermenge wirksamer als bei den gekühlten Schichten.

Zweistufige Feuerungen, die sich aus Feuerungen mit Luftmangel und aus einer verzögerten Zufuhr der Brennluft (da die Brennluft in sekundäre und tertiäre Luft unterteilt wird) ergeben, werden sowohl bei Kohlenstaubfeuerungen zwecks Herabsetzung der Stickoxide, als auch bei der Fluidisationsfeuerung - ebenfalls aus den obenerwähnten Gründen - mit Festbrennstoffen minderwertiger Qualität verwendet. Bei diesen Lösungen sind sowohl der Ausbrennungsgrad als auch die Verwertung des pulverisierten Kalksteins ungünstiger als bei den Verfahren mit gekühlter Schicht oder mit Zirkulation.

Der Erfindung wurde das Ziel gesetzt, eine Fluidisationsfeuerung - vorzugsweise mit gekühlter Wandung des Feuerraums - zu schaffen, die eine hohe Querschnittsleistung und eine billige Anlage ermöglicht und dabei alle die Vorteile des bisher kostenaufwendigen, mit Zirkulation arbeitenden Fluidisationssystems in sich vereinigt. Darüberhinaus sollen die niedrige Brenntemperatur sowie der Vorteil des zur Herabsetzung der Schwefeldioxidemission dienenden Einblasens von pulverisiertem Kalkstein oder Dolomit beibehalten werden.

Beim erfindungsgemäßen Verfahren wird die Luft mit einer solchen Geschwindigkeit eingeblasen, daß die feineren Fraktionen des Brennstoffs (und auch die brennbaren Gase) aus der Fluidisationsschicht nach oben herausgeblasen werden, wobei mit Hilfe der durchgeblasenen Luftmenge gleichzeitig die Temperatur der fluidisierten Schicht eingestellt wird, wobei der aus der Fluidisationsschicht ausgeblasene Staub und das Gas mit dem Sauerstoffüberschuß des durch die Schicht hindurchgeführten Gases weitestgehend vollkommen verbrannt wird. Im Bedarfsfall kann zur vollständigen Verbrennung eine weitere Menge von Sekundärluft zugeführt werden.

Im Sinne einer vorteilhaften Realisierungsweise des erfindungsgemäßen Verfahrens wird die Luft mit einer inhomogenen Geschwindigkeitsverteilung durch die Fluidisationsschicht geblasen, und zwar so, daß in dem in der Querrichtung gesehen mittleren Teil der Fluidisationsschicht eine höhere Fluidisationsgeschwindigkeit erzeugt wird als in den beiden Randteilen.

Im Sinne der Erfindung besteht die Möglichkeit, in dem Feuerraum über der Fluidisationsschicht die unverbrannten Stoffe zu rezirkulieren und nur das von dem brennbaren Teil freie Brennprodukt aus dem Feuerraum abzuführen.

Das gesetzte Ziel kann durch eine spezielle, aerodynamisch günstige Gestaltung der Geometrie des Feuerraums, durch die Ausnützung des gesamten Feuerraumvolumens für das Verbrennen und durch die bewährte und einfache Wandkühlung erreicht werden.

Im Sinne der Erfindung wird es als vorteilhaft angesehen, wenn für die Rezirkulation bzw. zum Abtrennen des brennbaren Teils von dem Brennprodukt der Feuerraum von den sonstigen Teilen der Feuerungsanlage separiert wird und diese über eine Öffnung mit einem gegenüber dem Querschnitt des Feuerraums verringerten Querschnitt miteinander verbunden werden. In diesem Fall besteht die Möglichkeit zwischen dem Feuerraum und den sonstigen Teilen der Feuerungsanlage eine Richtungsänderung vorzusehen, wobei das den Feuerraum verlassende Brennprodukt in eine außerhalb des Feuerraums um 180° umgekehrte Richtung geführt wird.

Erfindungsgemäß ist es vorteilhaft, wenn in den Bereich des aus der Fluidisationsschicht ausgeblasenen Staubes bzw. den Verbrennungsbereich der Gase Zweitluft zugeführt wird; durch die Zweiluftzuführung kann die Rezirkulation erhöht werden.

Eine weiterentwickelte Form der erfindungsgemäßen Feuerunganlage kann dadurch gekennzeichnet werden, daß zwischen dem Feuerraum und den sonstigen Teilen der Feuerungsanlage ein Ausströmquerschnitt, der enger ist, als der Querschnitt des Feuerraums, ausgestaltet ist und zwar derart, daß bei dem Ausgang des Feuerraums wenigstens eine das Ausströmen des Brennproduktes verhindernde und den Ausströmquerschnitt verengende Prallplatte angeordnet ist.

Bei einer vorteilhaften Ausführungsform der erfindungsgemäßen Feuerungsanlage sind die dem Feuerraum folgenden Teile der Feuerungsanlagen derart angeschlossen, daß die Strömung der Brennprodukte zuerst um 90° und darauffolgend nochmals um 90° umgelenkt wird.

Im Sinne der Erfindung wird die Prallplatte vorteilhaft so ausgestaltet, daß der Ausströmungsquerschnitt mindestens von drei Seiten her abgegrenzt, verengt ist. Es besteht jedoch auch die Möglichkeit, die Prallplatte so auszugestalten, daß sie den Ausströmungsquerschnitt in zwei Teile unterteilt. Es besteht weiterhin die Möglichkeit, an der Prallplatte einen in den Feuerraum senkrecht hineinragenden Ansatz zu befestigen, der sich in dem von der Prallplatte bestimmten Ausströmungsquerschnitt befindet oder diesen umgrenzt.

Bei einer weiteren vorteilhaften Ausführungsform können bei dem Ausgang des Feuerraums eine auf der Höhenrichtung der Feuerungsanlage senkrechte Prallplatte sowie parallel dazu verlaufende Prallplatten angeordnet werden; dabei kann man die senkrecht angeordnete Prallplatte mit zur Entleerung des Staubes dienenden Öffnung versehen.

Im Sinne der Erfindung wird es als vorteilhaft betrachtet, wenn die Anlage mit die Fluidisationsschicht erzeugenden Luftzuführorganen versehen ist bzw. durch die Trennung des Feuerraums von den sonstigen Teilen der Feuerungsanlage in dem Feuerraum ein Rezirkulationsstrom der die Fluidisationsschicht verlassenden Stoffe ausgestaltet wird.

Erfindungsgemäß wird auch diejenige Ausführungsform als vorteilhaft betrachtet, bei der Düsen vorgesehen sind, die Sekundärluft in den Feuerraum über der Fluidisationsschicht einführen. In diesem Fall besteht die Möglichkeit die über der Fluidisationsschicht liegende Strecke des Feuerraums wenigstens teilweise mit einer nach oben gerichteten Erweiterung trichterartig auszubilden, wobei die die Sekundärluft zuführenden Düsen mit den schrägen Flächen des sich erweiternden Abschnitts einen spitzen Winkel gegenüber der Vertikalen einschließen und in den Mittelteil des Feuerraums ausgerichtet angeordnet werden können.

Vorzugsweise werden die Düsen erfindungsgemäß so ausgestaltet, daß der höchste Punkt des Ausströmungsquerschnitts näher zu der Mittelebene des Feuerraums liegt als der niedrigste Punkt.

Erfindungsgemäß wird auch diejenige Ausführungsform als vorteilhaft betrachtet, bei der an den Ausgang des Feuerraums ein Staubsammelraum angeschlossen ist, durch welchen die Brennprodukte mit einer Richtungsänderung von 90° hindurchgeführt werden, wobei der Ausgang des Staubsammelraums in den Feuerraum zurückgeführt ist.

Der Erfindung wird anhand vorteilhafter Ausführungsbeispiele mit Hilfe der Zeichnung näher erläutert: es zeigen:

Fig. 1 den schematischen Vertikalschnitt einer vorteilhaften Ausführungsform der erfindungsgemäßen Feuerungsanlage,

Fig. 2 die Seitenansicht der Anlage nach Figur 1,

Fig. 3 den Vertikalschnitt einer weiteren Ausführungsform,

Fig. 4 die schematische Seitenansicht der Anlage nach Figur 3,

Fig. 5 den Vertikalschnitt einer weiteren möglichen Ausführungsform,

Fig. 6 den Vertikalschnitt einer weiteren Ausführungsmöglichkeit,

Fig. 7 die schematische Seitenansicht der Ausführungsform nach Figur 6,

Fig. 8 den Vertikalschnitt einer anderen möglichen Ausführungsform,

Fig. 9 einen Teil der erfindungsgemäßen Feuerungsanlage, nämlich den schematischen Längsschnitt der Sekundärluftdüse.

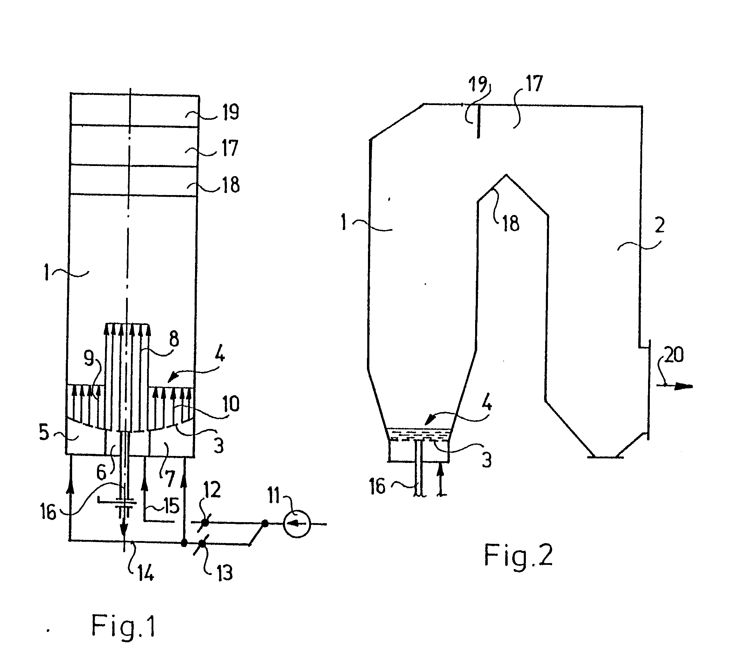

Wie aus Figur 1 und 2 wohl ersichtlich, weist die erfindungsgemäße Feuerungsanlage einen Feuerraum 1 mit oben liegendem Ausgang 17 und einen sich anschliessenden Rauchgasraum 2 mit unten liegendem Ausgang 20 auf. In dem Feuerraum 1 ist auf einem auch als Rost dienenden Luftverteiler 3 ein Fluidisationsbett 4 ausgebildet; unter dem Luftverteiler 3 befinden sich Luftkästen 5, 6 und 7.

Bei der hier dargestellten Ausführungsform ist die Fluidisationsschicht 4 in der zur Ebene der Figur parallelen Querrichtung in drei Teile unterteilt, und zwar so, daß im mittleren Teil 8 der Schicht 4 die Fluidisationsgeschwindigkeit höher ist als in den beiden neben dem Mittelteil 8 liegenden Randteilen 9, 10. Der besseren Übersicht halber sind auf den Teilen 8 - 10 die Fluidisationsgeschwindigkeiten mit kleinen Pfeilen angegeben. Bei dem hier dargestellten Ausführungsbeispiel sind die verschiedenen Fluidisationsgeschwindigkeiten so gestaltet, daß in die den Teilen 8 - 10 zugeordneten Luftkästen 5, 6 bzw. 7 Luft mit unterschiedlicher Geschwindigkeit eingeführt wird. Hierzu sind eine mit den Luftkästen 7 und 5 verbundene Leitung 14 unter Zwischenschaltung einer Drosselklappe 13 bzw. eine mit dem Luftkasten 6 verbundene Leitung 15 unter Zwischenschaltung einer Drosselklappe 12 an eine für die Luftversorgung sorgenden Ventilator 11 angeschlossen. Mit Hilfe der Drosselklappe 12 wird in der Leitung eine höhere Luftströmungsgeschwindigkeit eingestellt als mit der Drosselklappe 13 in der Leitung 14. Als Erfolg dieser Maßnahme entstehen die höhere Fluidisationsgeschwindigkeit in dem Mittelteil 8 bzw. die niedrigere Fluidisationsgeschwindigkeit in den Randteilen 9 und 10. Der Fluidisationsschicht ist außerdem ein zentrales Entleerungsrohr 16 zugeordnet, über welches der Staubüberschuß aus der Schicht 4 entfernt werden kann.

Im Sinne der Erfindung ist bei dem Ausgang des auch die Fluidisationsschicht 4 enthaltenden Feuerraums 1 an dessen oberem Ende seitlich die Ausströmungsöffnung 17 mit einem den Querschnitt des Feuerraums 1 unterschreitenden Querschnitt ausgestaltet.

Bei der in Figur 1 und 2 dargestellten Ausführungsform wird die Größe des Ausströmungsquerschnittes 17 durch eine in den Abgasraum 2 überführende dachförmige untere Platte 18 bzw. durch eine gegenüberliegende obere Prallplatte 19 bestimmt. Aus den Figuren geht deutlich hervor, daß die Platte 18 bzw. die Prallplatte 19 einen gegenüber der Größe des Feuerraums 1 verhältnismäßig engen Ausströmungsquerschnitt 17 bestimmen. Auf diese Weise ist der Feuerraum 1 von den sonstigen Teilen der Feueranlage separiert. Die Verbindung zwischen dem Feuerraum 1 und den sonstigen Teilen der Feuerungsanlage ist über den Ausströmungsquerschnitt 17 zustandegebracht.

Die Wirkungsweise der hier beschriebenen Ausführungsform ist wie folgt. Mit der von dem Ventilator 11 ankommenden Luft werden die unterschiedlichen Fluidisationsgeschwindigkeiten mit Hilfe der Klappen 12, 13 in der bereits beschriebenen Weise in den Teilen 8, 9, 10 der Fluidisationsschicht 4 eingestellt. Durch Einstellen der Luftmengen wird eine bestimmte Verbrennungstemperatur der Fluidsationsschicht 4 eingestellt. In dem Mittelteil 8 der Fluidisationsschicht 4 - wo die höchste Geschwindigkeit herrscht - wird obendrein über den Luftkasten 6 eine solche Luftgeschwindigkeit eingestellt, daß die brennbaren, in die Fluidisationsschicht 4 zugeführten Materialien, die feineren Fraktionen des Staubes, aus der Schicht herausgeblasen werden. Darüberhinaus wird über die Luftkästen 5, 6 bzw. 7 eine Luftmenge eingeführt, die dazu fähig ist, einen dem brennbaren Inhalt des ausgeblasenen Staubes und des Gases entsprechenden Sauerstoffüberschuß in dem Feuerraum 1 über der Schicht 4 einzustellen.

Als Erfolg der erwähnten Maßnahmen entsteht eine inhomogene Luftverteilung, die in dem Feuerraum 1 eine intensive innere Rezirkulation für eine vollständige Verbrennung des aus der Schicht 4 herausgeblasenen Materials, des brennbaren Staubes und des Gases hervorruft. Eine hierzu hinreichende Verweildauer dieser Stoffe in dem Feuerraum 1 wird durch den Ausströmungsquerschnitt 17 bzw. die Platte 18 und die Prallplatte 19 unterstützt. Die von der Fluidisationsschicht 4 nach oben fliegenden Materialien prallen gegen die Prallplatte 19, welche - mit dem verhältnismäßig engen Ausströmungsquerschnitt 17 zusammenwirkend - die Materialien zur Rückkehr zwingen. In dieser Weise findet die Rezirkulation statt, verbrennbare Materialien werden vollkommen verbrannt und laufen die für einen günstigen Umweltschutz erforderlichen Prozesse in dem Feuerraum 1 ab. Darüberhinaus wirkt die Rezirkulation auch auf den Ausgleich der Gastemperaturen.

Durch die inhomogene Geschwindigkeitsverteilung in der Fluidisationschicht 4 wird es möglich, neben dem Ausblasen des sich in der Schicht befindenden Staubes das Verhältnis der Wärmefreisetzung über der Schicht 4 bzw. innerhalb der Schicht 4 modifizieren zu können. Die in dem Feuerraum 1 freigesetzte Wärme wird in erster Linie über die Seitenwände der Feuerungsanlage abgeführt, da hier die in üblicher Weise ausgestalteten, hier nicht dargestellten Siederohre angeordnet sind. Es ist vorteilhaft, die Fluidisationsschicht 4 so zu speisen, daß in die Teile 9 und 10 mit der verhältnismäßig niedrigeren Geschwindigkeit Koks von oben her hineinfällt, der hier nachgebrannt wird. In dem Mittelteil 8 mit der höheren Geschwindigkeit und darüber verbrennt der Brennstoff mit dem flüchtigen Teil.

Die Rauchgase, die bereits keine brennbaren Anteile mehr enthalten und die Forderungen des Umweltschutzes befriedigen, strömen durch den Ausströmungsquerschnitt 17 in den Rauchgasraum 2, in welchem eine weitere Wärmemenge abgegeben wird. Es ist wohl ersichtlich, daß die Rauchgase beim Verlassen des Feuerraums 1 zuerst einer Richtungsänderung von 90°, und darauffolgend beim Eintreten in den Abgasraum 2 einer weiteren Richtungsänderung folgen. Dies bedeutet, daß die Rauchgase außerhalb des Feuerraums 1 in der umgekehrten Richtung strömen. Zuletzt verlassen die Rauchgase die Feuerungsanlage in Richtung des Pfeils 20.

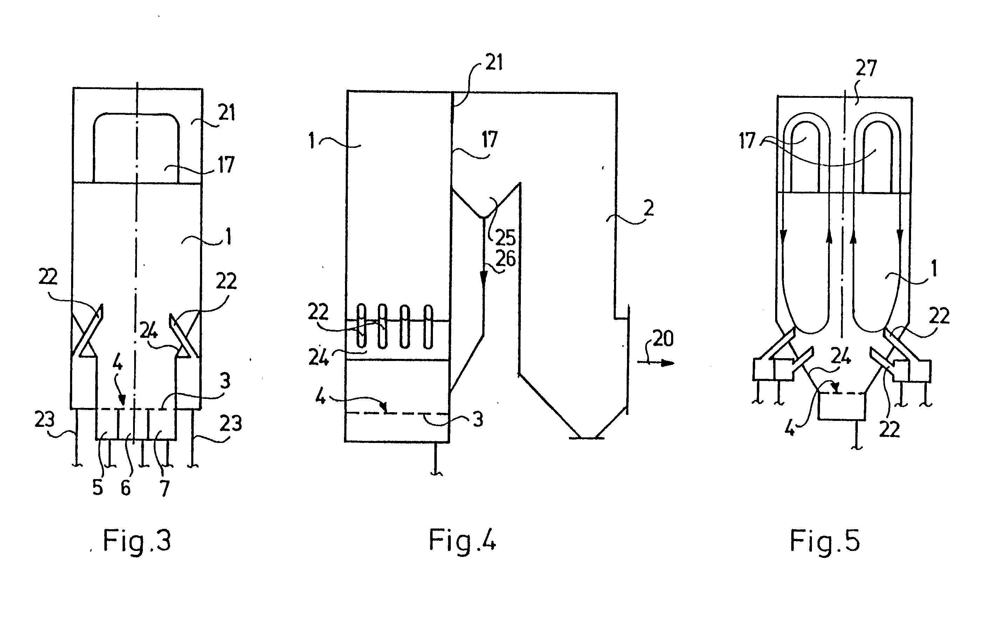

Die Figuren 3 und 4 stellen eine weitere mögliche Ausführungsform der erfindungsgemäßen Feuerungsanlage dar. Auch hier sind der Feuerraum 1, der sich daran anschließende Rauchgasraum 2 und die in dem Feuerraum 1 auf dem Luftverteiler 3 ausgestaltete Fluidisationsschicht 4 vorhanden, unter der die Luftkästen 5, 6, 7 mit den zuführenden Rohren angeordnet sind. Im Vergleich zu der vorherbeschriebenen Ausführungsform besteht der Unterschied darin, daß hier eine Prallplatte 21 ausgestaltet worden ist, die den Ausströmungsquerschnitt 17 von oben und von beiden Seiten her verengt. Ein weiterer Unterschied besteht darin, daß über der Fluidisationsschicht 4 beidseitig zwei Düsenreihen 22 angeordnet sind, die Sekundärluft einführen. Die Düsen 22 werden über eine Leitung 23 und einen Verteilerkasten gespeist. Die die Sekundärluft zuführenden Düsen 22 sind auf schrägen Flächen 24 befestigt, die jenen Teil des Feuerraums 1 bestimmen, der sich über der Schicht 4 erweitert. Die Düsen 4 - schließen mit der Vertikalen einen spitzen Winkel ein und sind zu der Mitte des Feuerraums 1 der Feuerungsanlage hin schräg nach oben ausgerichtet.

Im Anschluß an den Ausgang des Feuerraums 1 unmittelbar hinter dem Ausströmungsquerschnitt 17 ist im Verbindungskanal zwischen dem Feuerraum 1 und dem Rauchgasraum 2 ein Staubsammeltrichter 25 ausgebildet, der über einen Staubkanal 26 mit der Fluidisationsschicht kommuniziert.

Die in den Figuren 3 und 4 dargestellte Anlage funktioniert in ähnlicher Weise wie jene nach den Figuren 1 und 2. Die Prallplatte 12 ist torartig ausgestaltet, wodurch die Rezirkulation der brennbaren Stoffe, des Gases und des Staubes in dem Feuerraum 1 gefördert wird; die Rezirkulation wird auch durch die Zufuhr der Sekundärluft über die Düsen 22 begünstigt, da von der eingeblasenen Sekundärluft der in der Fluidisationsschicht 4 mit hoher Geschwindigkeit strömende Gasstrom über dem Luftkasten 6 eingeschnürt wird. Die zur Verbrennung der aus der Schicht 4 ausgeblasenen brennbaren Anteile erforderliche Sauerstoffmenge kann durch die Sekundärluft ebenfalls bereitgestellt werden.

Ähnlich wie bei der vorhergeschilderten Ausführungsform werden die Rauchgase durch den Ausströmungsquerschnitt 17 abgeführt. Der in den ausgeblasenen Rauchgasen eventuell noch vorhandene Staub wird in dem Trichterraum 25 angesammelt, aus dem der Staub über den Staubkanal 26 in die Fluidisationsschicht 4 zurückgeführt wird, so daß ein Nachbrennen erfolgt. Zuletzt verlassen die Rauchgase den als Rekuperator ausgebildeten Rauchgasraum 2 in Richtung des Pfeils 20.

Bei der in Figur 5 dargestellten Ausführungsform besteht der Unterschied hauptsächlich in der Gestaltung des Ausströmungsquerschnitts 17 und der Anordnung der Düsen 22. In diesem Ausführungsbeispiel wird der Ausströmungsquerschnitt von einer Prallplatte 27 bestimmt, die zwei nebeneinander ausgebildete "Tore" aufweist, d. h. der Strömungsquerschnitt 17 wird mit der Prallplatte 27 in zwei Teile unterteilt. Die Düsenreihen 22 sind so angeordnet, daß an beiden Seiten des Feuerraumes 1 auch untereinander angeordnete Düssen 22 vorhanden sind, so daß beidseitig die die Rezirkulation erhöhenden Geschwindigkeitsdifferenzen durch entsprechendes Einstellen der Zufuhr der Sekundärluft eingestellt werden können. In Figur 5 weist eine dünne Linie auf die Art und Weise der Rezirkulation im Inneren des Feuerraumes 1 hin.

Die Wirkungsweise der in Figur 5 dargestellten Version ist ähnlich wie die der vorher beschriebenen Ausführungsform; nur die Art und Weise der Rezirkulation sind unterschiedlich. Eigentlich kommen hier innherhalb des Feuerraums 1 zwei Rezirkulationsströme zustande; bei den begrenzenden Wänden des Feuerraums 1 bzw. entlang der Siederohre ist der Staub angereichert. Als Erfolg wird die Wärme auf eine abweichende Weise von dem Feurraum 1 entzogen, da durch den angereicherten Staub ein wirksamer Wärmeaustausch zwischen dem Gas-Staubgemisch und der Wand vor sich geht, von dem die Effekte, die eine homogene Temperaturverteilung hervorrufen, ergänzt werden. Über die Düsen 22 der Sekundärluft wird Sauerstoff in der erforderlichen Menge für eine vollständige Verbrennung der sich über der Fluidisationsschicht 4 befindenden brennbaren Teile zugeführt. Die Rauchgase verlassen den Feuerraum 1 durch den Ausströmungsquerschnitt 17.

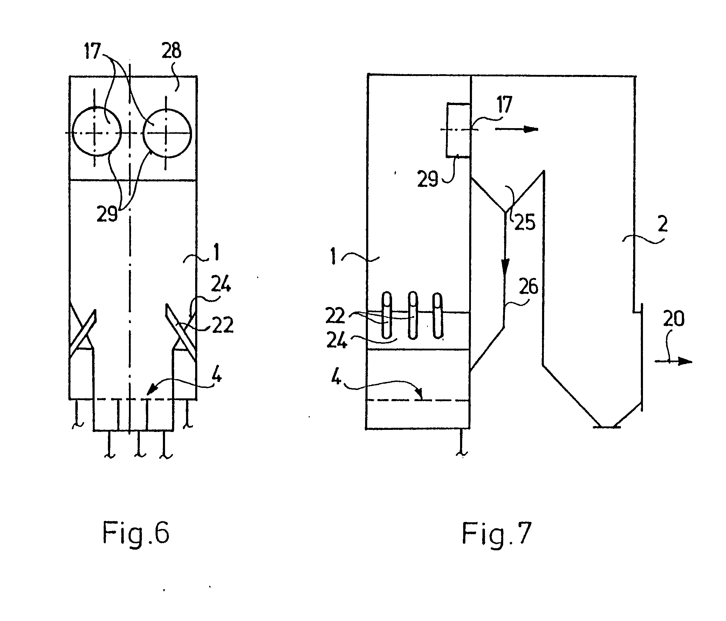

Die Ausführungsform nach den Figuren 6 und 7 ähnelt am meisten der Version nach den Figuren 3 und 4. In diesem Fall wird der Ausströmungsquerschnitt durch eine Prallplatte 28 bestimmt, auf der senkrecht abstehende Kragen oder Ansätze 29 befestigt sind. Die Ansätze 29 weisen die Form eines Zylinderstutzens auf, die die in einer Prallplatte 28 ausgestalteten kreisförmigen Austrittsöffnungen umgrenzen. Durch diese Gestaltung kann die in dem Feuerraum sich abspielende Rezirkulation erhöht werden, da der Austritt der Brennprodukte über den Ausströmquerschnitt 17 auch durch die Ansätze 29 erschwert wird.

Ein besonderer Vorteil dieser Ausführungsform zeigt sich darin, daß eine hochgradige Entstaubung ermöglicht wird, so daß die den Ausströmungsquerschnitt 17 verlassenden Brennprodukte nur eine geringe Menge von Staub enthalten; ein großer Teil davon setzt sich in dem Staubsammeltrichter 25 ab, wobei der gesammelte Staub - wie bereits erwähnt - über den Staubkanal 26 in die Fluidisationsschicht 4 zurückgeführt wird. Bei der hier dargestellten Version ragt der Ansatz 29 in den Feuerraum 1 hinein, aber es besteht auch die Möglichkeit, daß der Ansatz 29 in den Rauchgasraum 2 hineinragt.

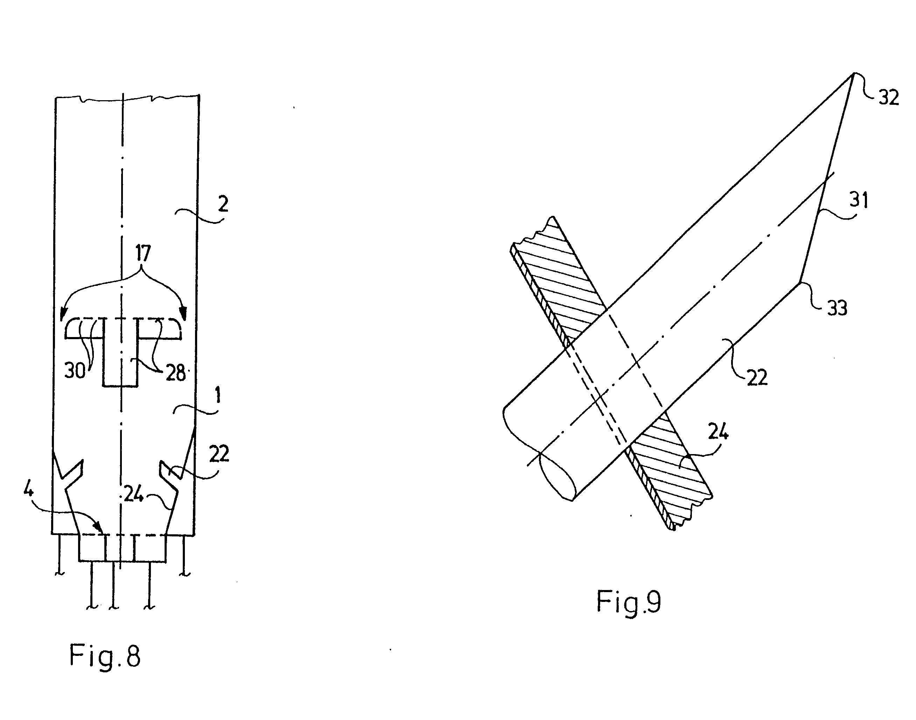

Figur 8 stellt eine weitere mögliche Ausführungsform der erfindungsgemäßen Feuerungsanlage dar, die insbesondere bei den sogenannten Turmkesseln vorteilhaft angewendet werden kann. Bei dieser Lösung sind der Feuerraum 1 und der Rauchgasraum 2 vertikal übereinander ausgebildet und die den Feuerraum 1 und den Rauchgasraum 2 voneinander trennenden zentralen Prallplatten 28 verlaufen zu der Höhenrichtung des Turmkessels senkrecht bzw. sind dazu parallel und bestimmen den Ausströmungsquerschnitt 17 für die Brennprodukte. Die zu der Höhenrichtung senkrechte, d. h. horizontale Prallplatte 28 ist mit zur Staubentleerung dienenden Öffnungen 30 versehen, über welche der über die horizontale Prallplatte 30 gelangende Staub in die Fluidisationsschicht 4 zurückfallen kann. Im Verlauf der nach oben gerichteten Strömung prallen die Brennprodukte auf den Prallplatten 28 auf und die Platten verhindern den - schnellen Austritt in den Rauchgasraum 2. In dieser Weise entsteht eine Rezirkulation in dem Feuerraum 1 selbst ohne eine Richtungsänderung in der Feuerungsanlage. Die horizontale Prallplatte 28 kann auch als ein Überhitzer, als eine Membran ausgestaltet werden.

Figur 9 veranschaulicht die Gestaltung der Düsen 22 und deren Befestigung in den Wänden 24. Wie bereits erwähnt, sind diese die Sekundärluft zuführenden Düsen 22 in Form gerader Rohre in den schrägen Wänden 24 des Feuerraumes befestigt und gegen die Mittellinie des Feuerraums 1 - schräg nach oben ausgerichtet. Ihr Austrittsquerschnitt 31 ist gegenüber der Vertikalen übermäßig - schräggestellt; dies bedeutet, daß der höchste Punkt 32 des Austrittsquerschnitts 31 näher zu der Vertikalen liegt. z. b. zu der vertikalen Mittelebene des Feuerraums 1. als der niedrigste Punkt 33 des Querschnitts 31. Durch eine derartige Gestaltung des Querschnitts der Düsen 22 kann verhindert werden, daß der in dem Feuerraum 1 strömende Staub in die Düsen 22 gelangt und sich dort absetzt. Übrigens stören die Düsen 22 die Rezirkulation in dem Feuerraum 1 nicht, der aufgewirbelte Staub kann ungehindert in die Fluidisationsschicht 4 zurückkehren.

Wie es aus den oben gemachten Ausführungen hervorgeht, ermöglicht die erfindungsgemäße Anordnung eine äußerst feine Regelung des Verbrennungsprozesses. Bei allen Ausführungsformen kann die Fluidisationsgeschwindigkeit der Fluidisationsschicht 4 genau geregelt werden, auch die Menge der durch die Luftkästen 5, 6, 7 geblasenen Luft und damit die Menge des aus der Schicht 4 ausgeblasenen Staubes, brennbaren Materials und des Gases, die Zufuhr der zum Verbrennen des aufgewirbelten Materials erforderlichen Sauerstoffmenge, die Temperatur der Schicht 4, sowie die zur Verbrennung in der Schicht erforderliche Luftmenge werden geregelt. Durch die Anwendung der die Sekundärluft einspeisenden Düsen 22 können die Verbrennungseigenschaften des Verbrennungsprozesses über der Fluidisationsschicht 4 in dem Feuerraum 1 eingestellt werden; die Zufuhr der für die beabsichtigte vollständige Verbrennung erforderlichen Sauerstoffmenge wird ebenfalls gewährleistet. Die sich in dem Feuerraum 1 abspielende Rezirkulation kann mit höchster Wirksamkeit beeinflußt werden, wodurch eine optimale Vorweildauer in dem Feuerraum 1 eingestellt werden kann. Diese Tatsache ist insbesondere dort von äußerster Wichtigkeit, wo Brennstoff minderwertiger Qualität verbrannt wird oder auf den Umweltschutz gerichtete Forderungen zu befriedigen sind.

Die unter Anwendung des erfindungsgemäßen Verfahrens bzw. der erfindungsgemäßen Feuerungsanlage durchgeführten Versuche haben überraschend gezeigt, daß der Verbrennungsprozeß zwischen breiten Grenzen geregelt werden kann; Teilbelastungen werden ohne etwaige Schwierigkeiten bei der breiten Auswahl der Brennstoffe eingestellt. Besonders günstig und überraschend ist die Wirkung, daß durch die Anwendung der erfindungsgemäßen Lösung eine Verunreinigung der Umgebung weitgehend herabgesetzt werden kann, auch dann, wenn aus diesem Standpunkt nachteiligere Brennstoffe verwendet werden als bei den bekannten Ausführungsformen.

**Ansprüche**

1. Verfahren zum Verbrennen von festen fluidisierten Brennstoffen und Luft, die von unten her eingeblasen wird, wodurch eine Fluidisationsschicht (4) erzeugt wird, dadurch gekennzeichnet, daß die Luft mit einer solchen Geschwindigkeit eingeblasen wird, daß die feineren Fraktionen des Brennstoffs und wenigstens ein Teil der brennbaren Gase aus der Fluidisationsschicht (4) herausgeblasen werden, wobei die Brenntemperatur der Fluidisationsschicht (4) über das Einstellen der Menge der eingeblasenen Luft eingestellt wird, wonach die zum Verbrennen des aus der Fluidisationsschicht (4) herausgeblasenen Staubes bzw. Gases erforderliche Sauerstoffmenge zugeführt wird.

2. Verfahren nach Anspruch 1, dadurch gekennzeichnet, daß die Luft in einer inhomogenen Geschwindigkeitsverteilung durch die Fluidisationsschicht (4) geblasen wird, so daß in dem in Querrichtung mittleren Teil (8) der Fluidisationsschicht (4) eine höhere Geschwindigkeit erzeugt wird als in den Randteilen (9, 10) derselben.

3. Verfahren nach Anspruch 1 oder 2, dadurch gekennzeichnet, daß in dem Feuerraum (1) über der Fluidisationsschicht (4) der unverbrannte Stoffanteil rezirkuliert wird und nur das von den brennbaren Anteilen freie Brennprodukt aus dem Feuerraum (1) abgeführt wird.

4. Verfahren nach Anspruch 3, dadurch gekennzeichnet, daß zwecks Rezirkukation bzw. Abtrennen der brennbaren Anteile aus dem Brennprodukt der Feuerraum (1) von den sonstigen Teilen (2) der Feuerungsanlage separiert wird, wobei die beiden über eine Öffnung (17) mit kleinerem Querschnitt als der Querschnitt des Feuerraums (1) miteinander verbunden sind.

5. Verfahren nach Anspruch 4, dadurch gekennzeichnet, daß das den Feuerraum (1) verlassende Brennprodukt zwischen dem Feuerraum (1) und den sonstigen Teilen (2) der Feuerungsanlage um 180° umgelenkt wird.

6. Verfahren nach einem der Ansprüche 1 bis 5, dadurch gekennzeichnet, daß in den Brennbereich des aus der Fluidisationsschicht ausgeblasenen Staubes bzw. der Gase Zweitluft zugeführt wird.

7. Verfahren nach Anspruch 6, dadurch gekennzeichnet, daß durch die Zweitluftzufuhr die Rezirkulation erhöht wird.

8. Feuerungsanlage mit Fluidistionsschicht, mit einem von den sonstigen Teilen (2) der Feuerungsanlage separierten und ein Fluidisationsbett (4) aufnehmenden Feuerraum (1) sowie mit die Fluidisationsschicht erzeugenden luftzuführenden Organen, dadurch gekennzeichnet, daß zwischen dem Feuerraum (1) und den sonstigen Teilen (2) der Feuerungsanlage eine Ausströmöffnung (17), deren Querschnitt kleiner als der Querschnitt des Feuerraums (1) ist, ausgestaltet ist, und zwar dadurch, daß bei dem Ausgang des Feuerraums (1) wenigstens eine ein Ausströmen fester Brennprodukte verhindernde und den Ausströmungsquerschnitt (17) verengende Prallplatte (19, 27, 28) angeordnet ist.

9. Feuerungsanlage nach Anspruch 8, dadurch gekennzeichnet, daß die dem Feuerraum (1) folgenden Teile der Feuerungsanlage sich in der Strömungsrichtung der Brennprodukte zuerst mit einer Richtungsänderung von 90°. und dann mit einer weiteren Richtungsänderung von 90° an den Feuerraum (1) anschließen.

10. Feuerungsanlage nach Anspruch 8 oder 9, dadurch gekennzeichnet, daß die Prallplatte (21) den Ausströmungsquerschnitt (17) von mindestens drei Seiten her verengt.

11. Feuerungsanlage nach einem der Ansprüche 8 bis 10, dadurch gekennzeichnet, daß die Prallplatte (27, 28) den Auströmungsquerschnitt (17) in zwei Teile unterteilt.

12. Feuerungsanlage nach einem der Ansprüche 8 bis 11, dadurch gekennzeichnet, daß in dem von der Prallplatte (28) bestimmten Ausströmungsquerschnitt (17) ein in den Feuerraum (1) senkrecht hineinragender Ansatz (29) auf der Prallplatte (28) befestigt ist.

13. Feuerungsanlage nach Anspruch 8, dadurch gekennzeichnet, daß am Ausgang des Feuerraums (1) zu der Höhenrichtung der Feuerungsanlage senkrechte sowie dazu parallele Prallplatten (28) angeordnet .sind und in der senkrecht verlaufenden Prallplatte (28) zur Entleerung des Staubes dienende Öffnungen (30) ausgestaltet sind.

14. Feuerungsanlage nach einem der Ansprüche 8 bis 13, dadurch gekennzeichnet, daß mit Hilfe der die Fluidisationsschicht (4) erzeugenden luftzuführenden Organe sowie durch die Abtrennung des Feuerraums (1) von den sonstigen Teilen (2) der Feuerungsanlage eine rezirkulierende Strömung der die Fluidisationsschicht verlassenden Stoffe in dem Feuerraum (1) gewährleistet ist.

15. Feuerungsanlage nach einem der Ansprüche 8 bis 14, dadurch gekennzeichnet, daß Düsen (22) vorgesehen sind, die Sekundärluft in den Feuerraum (1) über der Fluidisationsschicht (4) einführen.

16. Feuerungsanlage nach Anspruch 15, dadurch gekennzeichnet, daß die über der Fluidisationsschicht (4) liegende Strecke des Feuerraums (1) wenigstens teilweise sich nach oben erweiternd ausgestaltet ist, wobei die die Sekundärluft zuführenden Düsen (22) an den schrägen Flächen (24) der sich erweiternden Strecke, mit der Vertikalen einen spitzen Winkel einschließend zu dem Mittelabschnitt des Feuerraums (1) hin ausgerichtet angeordnet sind.

17. Feuerungsanlage nach Anspruch 15 oder 16, dadurch gekennzeichnet, daß der höchste Punkt (32) des Austrittsquerschnitts (31) der Düsen (22) näher an der Mittelebene des Feuerraums (1) liegt als ihr niedrigster Punkt (33).

18. Feuerungsanlage nach einem der Ansprüche 8 bis 17, dadurch gekennzeichnet, daß an den Ausgang des Feuerraums (1) ein Staubsammelraum (25) angeschlossen ist, durch welchen die Brennprodukte mit einer Richtungsänderung von 90° hindurchgeführt werden, wobei der Ausgang des Staubsammelraums (25) über einen Staubkanal (26) zu dem Feuerraum (1) zurückgeführt ist.

Fig.2

Fig.1

Fig.3

Fig.4

Fig.5

17  28

29

1

24

22

4

Fig.6

17

29

25

1

2

22
24

26

4

20

Fig.7

0 289 932

Fig.8

Fig.9

0 289 932

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 092 622 (YORK-SHIPLEY) * Seite 14, Zeile 4 - Seite 15, Zeile 31; Seite 16, Zeilen 11-15,25-29; Figur 1 * | 1,3,4,6,7 | F 23 C 11/02 F 23 J 3/04 F 23 L 9/02 B 01 J 8/38 |
| X A | | 8,14,15 12,16 | |
| Y | PATENT ABSTRACTS OF JAPAN, Band 8, Nr. 83 (M-290)[1520], 17. April 1984; & JP-A-59 1909 (KAWASAKI JUKOGYO K.K.) 07-01-1984 * Zusammenfassung * | 1,3,4,6,7 | |
| Y | US-A-4 341 515 (KORENBERG) * Spalte 5, Zeilen 25-44; Spalte 6, Zeilen 9-30; Figur * | 1,3,4,6,7 | |
| A | US-A-3 417 978 (SUZUKAWA) * Spalte 1, Zeilen 23-42; Spalte 3, Zeilen 12-44; Spalte 5, Zeilen 47-58; Spalte 6, Zeile 67 - Spalte 7, Zeile 4; Figuren 1,2 * | 2 | |
| A | WO-A-8 303 887 (LITTLE) * Seite 9, Zeilen 2-8,16-21; Seite 10, Zeilen 15-29; Seite 11, Zeilen 4-13,24-31; Figuren 1,2 * | 1,3,6,15,16 | RECHERCHIERTE SACHGEBIETE (Int. Cl.4) F 23 C F 23 J F 23 L B 01 J |
| A | EP-A-0 033 356 (BABCOCK) * Seite 4, Zeile 19 - Seite 5, Zeile 20; Figur * | 5,9 | |
| A | DE-C- 91 789 (PASLER) * Insgesamt * | 12 | |

Der vorliegende Recherchenbericht wurde für alle Patentansprüche erstellt

| Recherchenort | Abschlußdatum der Recherche | Prüfer |
|---|---|---|
| DEN HAAG | 16-08-1988 | PHOA Y.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)